# EUROPÄISCHE PATENTSCHRIFT

(11) **EP 3 021 072 B1**
(45) Veröffentlichungstag und Bekanntmachung des Hinweises auf die Patenterteilung: **28.09.2016**
(21) Anmeldenummer: 14193315.0
(22) Anmeldetag: 14.11.2014
(51) Int. Cl.: G01B 11/25, G03B 21/00, H04N 5/74

(54) **Beleuchtungsvorrichtung und Verfahren zur Projektion eines Beleuchtungsmusters**
Lighting device and method for projecting an illumination pattern
Dispositif d'éclairage et procédé destinés à la projection d'un modèle d'éclairage

(43) Veröffentlichungstag der Anmeldung: 18.05.2016
(73) Patentinhaber: SICK AG, 79183 Waldkirch (DE)
(72) Erfinder: Ringwald, Siegfried, 79215 Elzach (DE)
(74) Vertreter: Hehl, Ulrich

(56) Entgegenhaltungen:
- EP-A2- 2 500 687
- WO-A2-2004/077102
- DE-A1-102010 030 138
- DE-B3-102013 105 105

## Beschreibung

Die Erfindung betrifft eine Beleuchtungsvorrichtung und ein Verfahren zur Projektion eines Beleuchtungsmusters nach dem Oberbegriff von Anspruch 1 beziehungsweise 11.

Derartige Beleuchtungsprojektoren werden für vielfältige Anwendungen benötigt, wobei sich die nachfolgende Beschreibung stellvertretend auf das Beispiel der Ausleuchtung einer Szenerie für die Bildaufnahme mit einer Kamera bezieht. Besonders im Falle einer dreidimensionalen Bilderfassung wird häufig nicht lediglich Helligkeit durch homogene Beleuchtung, sondern ein strukturiertes Beleuchtungsmuster benötigt. Einige nicht abschließende Beispiele sind Streifenprojektion, Punktmusterprojektion sowie sinusmodulierte oder gepulste Beleuchtungsmuster.

Ein bekanntes Prinzip zur Erfassung dreidimensionaler Bilddaten beruht auf Triangulation unter Zuhilfenahme einer aktiven Musterbeleuchtung. Bei stereoskopischen Systemen werden dann jeweils mindestens zwei Aufnahmen aus unterschiedlicher Perspektive erzeugt. In den überlappenden Bildbereichen werden gleiche Strukturen identifiziert und aus der Disparität und den optischen Parametern des Kamerasystems mittels Triangulation Entfernungen und somit das dreidimensionale Bild berechnet. Das Beleuchtungsmuster sorgt dafür, dass sich auch in Bereichen ohne natürliche Struktur zuverlässig Korrespondenzen finden lassen. Andere Triangulationssysteme verwenden nur ein Bild einer Kamera und korrelieren dies mit dem bekannten Beleuchtungsmuster.

Herkömmlich sind die Beleuchtungsmuster meist statisch. Als Mustergenerator werden unter anderem optische Phasenplatten (EP 2 166 304 A1), diffraktive optische Elemente (US 2007/0263904 A1), Dias (US 2008/0240502 A1) oder unregelmäßige Mikrolinsenarrays (US 2010/0118123 A1) vorgeschlagen.

Manche Anwendungen fordern aber ein dynamisch angepasstes Beleuchtungsmuster. So beschreibt die EP 2 019 281 A1 ein Verfahren, mit dem für die jeweilige Szene ein für stereoskopische Bilderfassung optimales Beleuchtungsmuster berechnet wird. Dadurch lassen sich deutlich verbesserte dreidimensionale Bilddaten lückenlos oder zumindest mit weniger Bildlücken erfassen. Allerdings nennt die EP 2 019 281 A1 keine praktische Möglichkeit, wie sich das gewünschte Beleuchtungsmuster erzeugen und umschalten lässt.

Aus der DE 10 2010 030 138 A1 ist ein Projektionsdisplay zur dynamischen Erzeugung von Beleuchtungsmustern bekannt, das auf einem reflektiven Bildgeber basiert und beispielsweise für die Zwecke der EP 2 019 281 A1 genutzt werden könnte.

Bei allen genannten herkömmlichen Ansätzen bleibt die Helligkeitsverteilung über das Beleuchtungsmuster hinweg homogen. Bei der Bilderfassung ergibt sich aber ein natürlicher Randlichtabfall nach dem cos^4-Gesetz, d. h. die Bildhelligkeit nimmt bei der Bildübertragung durch eine abbildende Optik mit dem cos^4 des Bildwinkels von der Bildmitte nach außen hin ab. Bei einem Bildwinkel von 35° etwa sinkt die Helligkeit dadurch im Vergleich zu der Bildmitte auf nur noch 45% ab. Deshalb verschlechtert sich die Leistungsfähigkeit einer 3D-Kamera mit homogener Intensitätsverteilung der Beleuchtung, denn die Leistungsfähigkeit hängt von der Messgenauigkeit über das gesamte Bild und damit letztlich den Bereichen mit der unzureichendsten Ausleuchtung ab.

Die EP 2 772 676 A1 schlägt als Beleuchtung für eine 3D-Kamera ein Halbleiterarray mit einer Vielzahl von Einzelemittern in unregelmäßiger Anordnung vor, die jeweils ein Musterelement des unregelmäßigen Beleuchtungsmusters erzeugen. Die Einzelemitter können im Außenbereich mit höheren Strömen angesteuert werden, oder sie weisen im Außenbereich eine höhere Dichte auf, um den Randlichtabfall zu kompensieren. Dieser Ansatz ist aber für eine dynamische Anpassung nicht nur der Intensität, sondern auch des Beleuchtungsmusters selbst völlig untauglich, da letztlich die Anordnung der Einzelemitter direkt abgebildet wird und damit das Beleuchtungsmuster schon bei der Herstellung festliegt.

Es ist daher Aufgabe der Erfindung, eine Beleuchtungsvorrichtung für die Ausleuchtung einer mit einer Kamera zu erfassenden Szenerie zu verbessern.

Diese Aufgabe wird durch eine Beleuchtungsvorrichtung und ein Verfahren zur Projektion eines Beleuchtungsmusters nach Anspruch 1 beziehungsweise 11 gelöst. Eine Lichtquelle beleuchtet einen reflexiven Mustergenerator an zwei Stellen über zwei Strahlteiler und einen optischen Verzögerer. Letzteres bezeichnet jegliches optische Element zur Polarisationsdrehung, und der Begriff lehnt sich an die übliche praktische Umsetzung als transparente Platte, insbesondere Halbwellenlängenplatte oder λ/2-Plättchen an. Der Mustergenerator verändert ortsabhängig, etwa durch eine Pixelanordnung, Eigenschaften des reflektierten Lichts und insbesondere dessen Polarisation, so dass nur die dem gewünschten Beleuchtungsmuster entsprechenden Lichtanteile durch jeweilige den Strahlteilern zugeordnete Projektionsoptiken projiziert werden. Die Erfindung geht nun von dem Grundgedanken aus, mit einer Projektionsoptik Licht nach außen und mit der anderen Projektionsoptik zentral zu projizieren. Somit ist die eine Projektionsoptik für den Randbereich, die andere für die Mitte des Beleuchtungsmusters zuständig. Die Lichtanteile, die durch die jeweilige Projektionsoptik gelenkt werden, weisen aufgrund von Verlusten in den Strahlteilern unterschiedliche Intensitäten auf. Das kann durch entsprechende Anordnung und Auslegung der Projektionsoptiken gezielt für eine Randbereichsüberhöhung ausgenutzt werden, die den einleitend beschriebenen nachteiligen Randbereichsabfall einer Kamera ausgleicht.

Die Erfindung hat den Vorteil, dass eine besonders effiziente Lichtumverteilung bei idealer dynamischer Anpassung des Beleuchtungsmusters an die Szenerie möglich wird. Szenen mit kontrastarmen und dunklen Bereichen können so mit der zur Verfügung stehenden Lichtleistung präziser durch eine Kamera detektiert werden.

Der erste Strahlteiler erzeugt einen reflektierten ersten Lichtanteil und einen transmittierten zweiten Lichtanteil, die zueinander unterschiedlich polarisiert sind. Der Strahlteiler wirkt also polarisierend, während die Lichtquelle unpolarisiertes Licht abstrahlt, damit die Aufteilung an dem Strahlteiler stattfindet. Beispielsweise ist der erste Lichtanteil s-polarisiert und der zweite Lichtanteil p-polarisiert.

Erster Strahlteiler, Mustergenerator und erste Projektionsoptik sind derart angeordnet, dass der erste Lichtanteil unter Aufprägung des Beleuchtungsmusters an dem Mustergenerator reflektiert und dann nach Transmission des ersten Strahlteilers von der ersten Projektionsoptik projiziert wird. Der erste Lichtanteil weist nach Reflexion an dem Mustergenerator eine dem Beleuchtungsmuster entsprechende ortsabhängige Verteilung vorzugsweise der Polarisationseigenschaften auf. Das für das Beleuchtungsmuster relevante Licht hat damit eine Polarisation, mit der es den ersten Strahlteiler ungehindert passiert.

Erster Strahlteiler, Verzögerer, zweiter Strahlteiler, Mustergenerator und zweite Projektionsoptik sind derart angeordnet, dass der zweite Lichtanteil den Verzögerer unter Polarisationsdrehung durchläuft, dann vom zweiten Strahlteiler auf den Mustergenerator reflektiert wird, unter Aufprägung des Beleuchtungsmusters an dem Mustergenerator reflektiert und dann nach Transmission des zweiten Strahlteilers von der zweiten Projektionsoptik projiziert wird. Der zweite Lichtanteil ist der Anteil des am ersten Strahlteiler ankommenden Lichts der Lichtquelle, der dort wegen der falschen Polarisationsrichtung ungenutzt bleibt. Der Verzögerer sorgt für eine Polarisationsdrehung, so dass aus dem zunächst ungenutzten zweiten Lichtanteil von dem ersten Strahlteiler die Beleuchtung für den zweiten Strahlteiler wird ("Polrecycling"). Eine ungenutzte transmittierte Komponente des am zweiten Strahlteiler ankommenden Lichts gibt es wegen des bereits richtig polarisiert einfallenden Lichts nicht mehr. Stattdessen wird der zweite Lichtanteil - bei idealem Strahlteiler - vollständig zu dem Mustergenerator reflektiert, um dann in einer Strahlführung analog derjenigen am ersten Strahlteiler mittels der zweiten Projektionsoptik einen weiteren Teil des Beleuchtungsmusters zu erzeugen.

Erster Strahlteiler, Verzögerer und zweiter Strahlteiler sind in dieser Reihenfolge längs der optischen Achse der Lichtquelle angeordnet. Diese Anordnung ermöglicht, den ersten Lichtanteil zum Mustergenerator zu reflektieren und den zweiten Lichtanteil nach Polarisationsdrehung am Verzögerer zu dem zweiten Strahlteiler zu führen.

Der Mustergenerator ist bevorzugt parallel zur optischen Achse der Lichtquelle und dagegen versetzt angeordnet. Der Mustergenerator bildet so gleichsam eine Grundebene der Beleuchtungsvorrichtung. Die Lichtquelle beleuchtet von der Seite, und die Strahlteiler reflektieren die jeweiligen Lichtanteile auf die Grundebene.

Die Projektionsoptiken sind bevorzugt auf einer dem Mustergenerator gegenüberliegenden Seite der optischen Achse der Lichtquelle angeordnet. So entsteht ein kompakter Aufbau mit dem Mustergenerator als Grundebene, einer seitlichen Beleuchtung durch die Lichtquelle, den Strahlteilern auf deren horizontal verlaufender optischer Achse und den Projektionsoptiken als oberem Abschluss der Beleuchtungsvorrichtung.

Dem Mustergenerator ist bevorzugt eine Kondensoroptik vorgeordnet. Dabei handelt es sich nochmals bevorzugt um ein Mikrolinsenarray mit Mikrolinsen für die jeweiligen Pixel des Mustergenerators.

Die Projektionsoptiken weisen bevorzugt ein Mikrolinsenarray auf. Die Umverteilung des Lichts nach außen in der ersten Projektionsoptik beziehungsweise zentral in der zweiten Projektionsoptik kann durch einen entsprechenden Versatz zwischen jeweiliger Mikrolinse und zugehörigem Pixel erreicht werden. Das lässt sich auch bei in sich gleichmäßiger Matrixanordnung von Mikrolinsen und Pixeln durch unterschiedliche Rastergröße (Pitch) erreichen. Auch ein Verkippen von Mikrolinsen ist denkbar.

Bevorzugt projiziert die zweite Projektionsoptik das Licht in einen mittleren Streifen und die erste Projektionsoptik in zwei Randstreifen. Dadurch wird eine Randbereichsüberhöhung in einer Dimension erreicht. Alternativ projiziert die zweite Projektionsoptik das Licht in ein zentrales Rechteck oder eine zentrale Ellipse und die erste Projektionsoptik in einen Rechteckrahmen oder elliptischen Rahmen. Dabei entsteht ein Rahmen des Beleuchtungsmusters mit höherer Intensität, also eine zweidimensionale Randbereichsüberhöhung.

Der Mustergenerator weist bevorzugt eine Pixelanordnung von polarisationsdrehenden Reflexionselementen auf. Dabei bilden die Pixel eine Zeile oder eine Matrix. Die Pixel können durch Ansteuerung wahlweise eine Eigenschaft, insbesondere die Polarisation, des an dem Pixel reflektierten Lichts verändern oder nicht, wodurch ein frei wählbares Beleuchtungsmuster entsteht. Eine mögliche Ausführung des Mustergenerators ist ein LCoS (Liquid Crystal on Silicon), ein reflexives integriertes Flüssigkristalldisplay.

Die Lichtquelle weist bevorzugt eine Matrix von Einzellichtquellen auf. Obwohl dafür separate Einzellichtquellen denkbar sind, ist vorzugsweise ein Chip mit LEDs oder Laserdioden gemeint. Die mehreren Lichtquellen erlauben eine höhere Gesamtleistung, insbesondere ein Vielfaches der durchschnittlichen Nennleistung, um Spielraum für Helligkeitsanpassungen zu haben. Vorzugsweise sind die Lichtquellen für eine angepasste Helligkeitsverteilung einzeln ansteuerbar, etwa mit unterschiedlichen Strömen. So entstehen ortsabhängige Intensitätsverteilungen mit hellen und dunklen Bereichen etwa zur hellen Ausleuchtung interessierender Bereiche (ROI, region of interest), aber auch um Übersteuerungen in bereits in der vorhandenen Szenerie hellen Bereichen zu vermeiden.

Die Besetzungsdichte der Einzellichtquellen nimmt bevorzugt von einem zentralen Bereich der Matrix nach außen hin zu. Dadurch ergibt sich bereits an der Lichtquelle eine Lichtumverteilung zum Rand der beleuchteten Szene hin, welche die Umverteilung durch die Projektionsoptiken ergänzt und in manchen Fällen auch ersetzen kann.

In bevorzugter Weiterbildung werden zwei oder mehr erfindungsgemäße Beleuchtungsvorrichtungen nebeneinander angeordnet, wobei ein gemeinsamer reflexiver Mustergenerator und eine Blende zur Vermeidung von optischem Übersprechen zwischen den Beleuchtungsvorrichtungen vorgesehen ist. Nochmals bevorzugt beleuchtet dabei die eine Lichtquelle von rechts und die andere von links. Es gibt nun insgesamt vier Projektionsoptiken und damit zusätzliche Freiheitsgrade für eine Lichtumverteilung, etwa um sich dem cos^4-Abfall in mehreren Schritten feiner anzupassen. Es ist aber auch denkbar, die beiden Beleuchtungsvorrichtungen zueinander identisch auszubilden und lediglich zu spiegeln oder zu verdrehen, um beleuchten zu können. Der Mustergenerator wird vorzugsweise nicht mit den Beleuchtungsvorrichtungen der Anordnung verdoppelt, sondern wird nur ein gemeinsamer Mustergenerator verwendet. Prinzipiell können auch mehr als zwei Beleuchtungsvorrichtungen mit mehr als vier Strahlteilern beziehungsweise Projektionsoptiken vorgesehen sein.

Vorzugsweise ist eine 3D-Kamera mit mindestens einer erfindungsgemäßen Beleuchtungsvorrichtung ausgerüstet. Ein adaptiertes Beleuchtungsmuster ist besonders nützlich für eine Stereokamera oder eine entsprechende triangulierende Kamera, die das Beleuchtungsmuster mit dem Kamerabild korreliert. Durch die erfindungsgemäße Lichtumverteilung zu den Rändern wird der Randbereichsabfall des Kameraobjektivs zumindest teilweise kompensiert, so dass sich eine bessere Messgenauigkeit und damit eine bessere Qualität der dreidimensionalen Bilddaten ergibt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer Beleuchtungsvorrichtung mit reflexivem Mustergenerator nach dem Stand der Technik;
- Fig. 2: eine schematische Darstellung einer Beleuchtungsvorrichtung mit reflexivem Mustergenerator und Beleuchtung von beiden Seiten nach dem Stand der Technik;
- Fig. 3: eine schematische Darstellung einer Beleuchtungsvorrichtung mit reflexivem Mustergenerator und Polrecycling durch einen zweiten Strahlteiler nach dem Stand der Technik;
- Fig. 4: eine schematische Darstellung des Helligkeitsverlusts in der zweiten Hälfte des Beleuchtungsmusters, das von einer Beleuchtungsvorrichtung nach Figur 3 erzeugt wird;
- Fig. 5: eine schematische Darstellung der Helligkeitsverteilung einer erfindungsgemäßen Beleuchtungsvorrichtung mit hellen Randstreifen;
- Fig. 6: eine schematische Darstellung der Helligkeitsverteilung einer erfindungsgemäßen Beleuchtungsvorrichtung mit hellem Rahmen;
- Fig. 7: eine schematische Darstellung einer erfindungsgemäßen Beleuchtungsvorrichtung mit Beleuchtung von beiden Seiten; und
- Fig. 8: eine schematische Draufsicht auf eine Lichtquelle für eine Ausführungsform der erfindungsgemäßen Beleuchtungsvorrichtung mit nach außen hin erhöhter Besetzungsdichte der Einzellichtquellen.

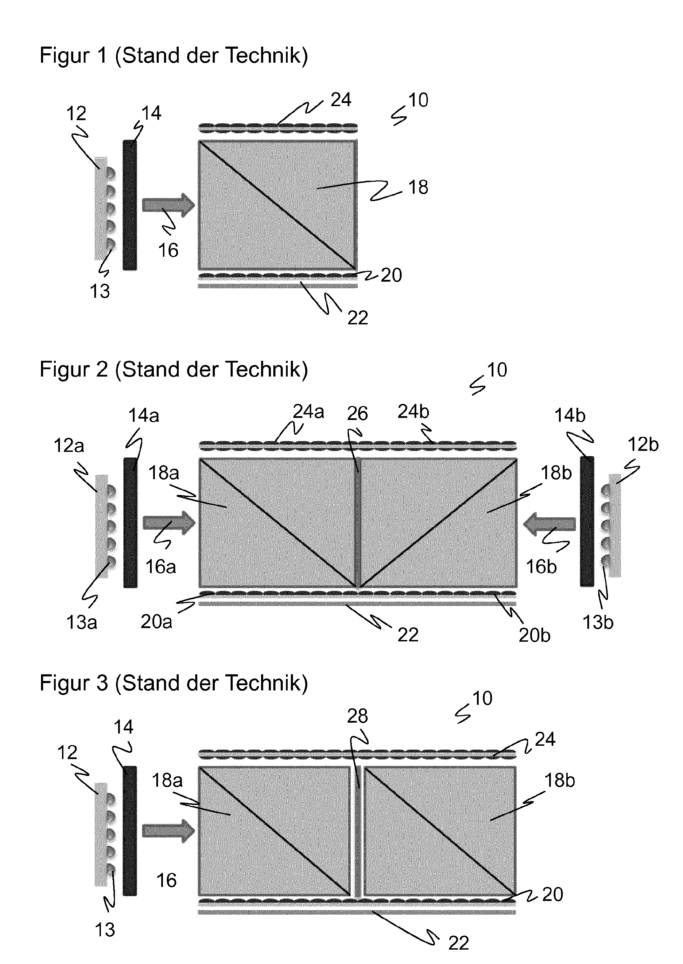

Figur 1 zeigt eine schematische Darstellung einer Beleuchtungsvorrichtung 10, die nach dem Prinzip der einleitend genannten DE 10 2010 030 138 A1 aufgebaut ist. Eine Lichtquelle 12 mit mehreren Einzellichtquellen 13 erzeugt durch eine Kollimationsoptik 14 einen einfallenden unpolarisierten Lichtstrahl 16, der auf einen beispielsweise als polarisierender Strahlteilerwürfel ausgebildeten Strahlteiler 18 fällt.

Der Strahlteiler 18 erzeugt aus dem einfallenden Lichtstrahl 16 einen in der Darstellung nach unten reflektierten s-polarisierten ersten Lichtanteil und einen transmittierten p-polarisierte zweiten Lichtanteil. Der zweite Lichtanteil bleibt in der Ausführungsform nach Figur 1 ungenutzt und wird beispielsweise in einer nicht gezeigten Lichtfalle geschluckt. Der erste Lichtanteil trifft über eine Kondensoroptik 20 auf einen reflexiven Mustergenerator 22. Dabei handelt es sich beispielsweise um ein LCoS (Liquid Crystal on Silicon) mit einer Vielzahl von Pixelelementen, die mit einem gewünschten Muster angesteuert werden. Pixel, die in einem zu projizierenden Beleuchtungsmuster hell sein sollen, modulieren das reflektierte Licht anders als Pixel, die in dem Beleuchtungsmuster dunkel bleiben. Dies lässt sich beispielsweise durch pixelweise unterschiedliche Polarisation erreichen, denn das reflektierte Licht passiert erneut den Strahlteiler 18, wo nur Licht der passenden Polarisation transmittiert und damit projiziert wird. Die Modulation kann für unterschiedliche Helligkeitsstufen der Pixel des Beleuchtungsmusters abgestuft sein. Dem Mustergenerator 22 kann je nach Ausführungsform noch eine λ/4-Platte zugeordnet sein.

Die Lichtanteile, die entsprechend der Pixelansteuerung des Mustergenerators 22 das Beleuchtungsmuster bilden und mit ihren entsprechenden Polarisationseigenschaften den Strahlteiler 18 nach Reflexion an dem Mustergenerator 22 transmittieren, werden durch eine Projektionsoptik 24 geführt. Die in Figur 1 dargestellte Beleuchtungsvorrichtung 10 projiziert demnach das Beleuchtungsmuster nach oben in eine Szenerie.

Figur 2 zeigt eine weitere Ausführungsform der herkömmlichen Beleuchtungsvorrichtung 10. Sie entsteht praktisch durch Nebeneinanderordnung zweier Beleuchtungsvorrichtungen 10 nach Figur 1, wobei eine dieser Beleuchtungsvorrichtungen 10 an einer vertikalen Achse gespiegelt ist. Außerdem wird nur ein gemeinsamer Mustergenerator 22 verwendet, und die Aufteilung der Kondensoroptik 20a-b und der Projektionsoptik 24a-b ist künstlich, da sie gleiche Eigenschaften aufweisen und ebenso als gemeinsames Bauteil verstanden oder ausgeführt sein können. Zwischen den beiden Strahlteilern 18a-b ist eine Blende oder Lichtfalle 26 angeordnet.

Durch Beleuchtung mit zwei Lichtquellen 12a-b von beiden Seiten kann so die Leistung der Beleuchtungsvorrichtung 10 verdoppelt werden. Allerdings gehen wie schon in der Beleuchtungsvorrichtung 10 nach Figur 1 die transmittierten zweiten Lichtanteile des einfallenden Lichtstrahls 16a-b und damit je nach Auslegung der Strahlteiler 18a-b etwa die Hälfte des erzeugten Lichts in der Lichtfalle 26 verloren. Damit ist die Beleuchtungsvorrichtung 10 recht ineffizient.

Figur 3 zeigt eine Möglichkeit in Anlehnung an DE 10 2010 030 138 A1, die Effizienz der Beleuchtungsvorrichtung nach Figur 1 zu steigern ("Polrecycling"). Auch diese Ausführungsform könnte nach dem Grundgedanken der Figur 2 durch Verdopplung und Beleuchtung von beiden Seiten weiter modifiziert werden.

Wie in Figur 3 gezeigt, wird ein zweiter Strahlteiler 18b neben dem ersten Strahlteiler 18a angeordnet. Dazwischen befindet sich ein optischer Verzögerer 28 (Retarder, λ/2-Plättchen) mit polarisationsverändernden Eigenschaften. Es ist möglich, einen λ/2-Verzögerer 28 für Licht mit einer Wellenlänge von 850 nm aus drei Folienverzögerern für 500 nm λ/4-Plättchen zusammenzusetzen und so einen Folienverzögerer mit drei Lagen mit je 75 µm Dicke zu erhalten. Alternativ sind aber auch Glasverzögerer, dann allerdings mit Mittendicken von 2 mm und mehr denkbar.

Das Prinzip des Polrecyclings nach Figur 3 ist das Folgende. Zunächst wird der einfallende Lichtstrahl 16 wie zu Figur 1 beschrieben an dem ersten Strahlteiler 18a in einen ersten reflektierten Lichtanteil und einen zweiten transmittierten Lichtanteil aufgeteilt. Der reflektierte Lichtanteil erzeugt ganz analog zu Figur 1 einen linken Teilbereich des Beleuchtungsmusters. Im Unterschied zu Figur 1 wird aber der zweite Lichtanteil in einer zweiten Stufe weiterverwendet ("Recycling"). Dazu wird zunächst dessen Polarisation in dem Verzögerer 28 gedreht. Deshalb wird der zweite Lichtanteil an dem zweiten Strahlteiler 18b nicht mehr transmittiert, sondern reflektiert, und zwar wegen seiner Polarisationseigenschaften anders als der einfallende unpolarisierte Lichtstrahl 16 an dem ersten Strahlteiler 18a sogar vollständig. Das gilt natürlich nur für ideale optische Elemente, real verbleiben beispielsweise nach Durchtritt durch den Verzögerer 28 ca. 80% des Lichts mit der gewünschten Polarisation. Ganz entsprechend der Entstehung des linken Teilbereichs des Beleuchtungsmusters aus dem ersten Lichtanteil wird nun der zweite Lichtanteil an dem Mustergenerator 22 in die Projektionsoptik 24 reflektiert und so ein rechter Teilbereich des Beleuchtungsmusters projiziert.

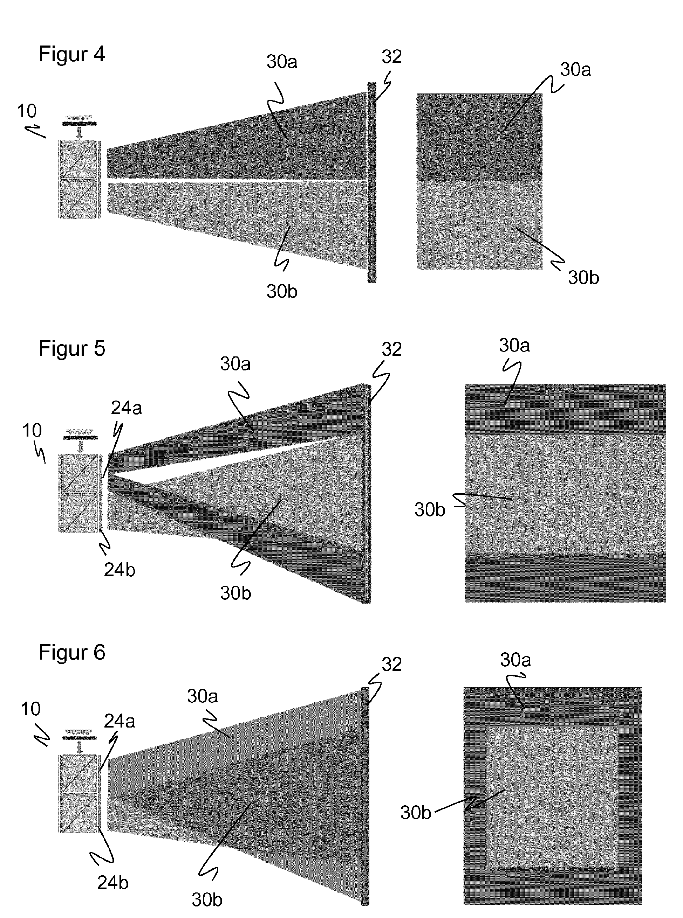

Figur 4 zeigt schematisch die Helligkeitsverteilung für eine Beleuchtungsvorrichtung 10 mit Polrecycling gemäß Figur 3. Diese Helligkeitsverteilung entspricht einer mittleren Helligkeit des Beleuchtungsmusters. Der erste Strahlteiler 18a projiziert 50% des einfallenden Lichtstrahls 16, der zweite Strahlteiler 18b durch Verluste und Abweichungen von realen und idealen optischen Elementen nur noch etwa 30%. Die Folge ist, dass ein erstes Teilmuster 30a des ersten Strahlteilers 18a deutlich heller ist als ein zweites Teilmuster 30b des zweiten Strahlteilers 18b. Figur 4 zeigt dies in einem Schnitt und rechts noch einmal auf einer Querschnittsfläche 32 der Szenerie. Dadurch wird bei Aufnahme der Szenerie mit einer Kamera die Helligkeitsverteilung zwischen linker und rechter Bildhälfte sehr inhomogen.

Die Figuren 5 und 6 illustrieren, wie dieser Störeffekt gemäß Figur 4 vorteilhaft für eine Kompensation des Randlichtabfalls genutzt werden kann. Dazu wird die Projektionsoptik 24 in zwei Projektionsoptiken 24a-b geteilt, die jeweils einem Strahlteiler 18a-b zugeordnet sind. Dabei ist die Aufteilung funktional zu verstehen, tatsächlich kann es sich weiterhin um ein gemeinsames Bauteil handeln, insbesondere ein gemeinsames Mikrolinsenfeld.

Zumindest eine der Projektionsoptiken 24a-b wird nun so ausgebildet, dass sie das Licht umverteilt. Das kann beispielsweise bei einem Mikrolinsenfeld durch Versatz und/oder Verkippen der Mikrolinsen erreicht werden. Das Beleuchtungsmuster wird durch die Umverteilung in den Projektionsoptiken 24a-b zentral, also im Inneren, dunkler als außen, also an den Rändern. Vorzugsweise wird dazu der erste Lichtanteil nach außen umverteilt und der zweite Lichtanteil nach innen, denn der zweite Lichtanteil ist durch das Polrecycling abgeschwächt. Es ergibt sich also eine Randbereichsüberhöhung der Helligkeit des Beleuchtungsmusters. Das Muster auf dem Mustergenerator 22 wird aufgrund der Umverteilung nicht mehr direkt abgebildet, aber dies ist durch eine passende inverse Umordnung bei der Ansteuerung der Pixel leicht auszugleichen.

In dem Ausführungsbeispiel nach Figur 5 ist die erste Projektionsoptik 24a so ausgelegt, dass eine Energieumverteilung in zwei seitliche Randstreifen erfolgt. Der mittlere Streifen wird über die zweite Projektionsoptik 24b beleuchtet und bleibt dunkler.

In Figur 6 erfolgt eine Umverteilung in die gesamte Außenzone. Es entsteht eine Art heller Rahmen. Anstelle der gezeigten rechteckigen Beleuchtungsbereiche können auch Kreise oder Ellipsen und letztlich beliebig nach außen hin hellere Intensitätsverteilungen erzeugt werden. Die Umverteilung bleibt vorzugsweise symmetrisch, damit die Bildqualität einer die Szenerie aufnehmenden Kamera richtungsunabhängig bleibt.

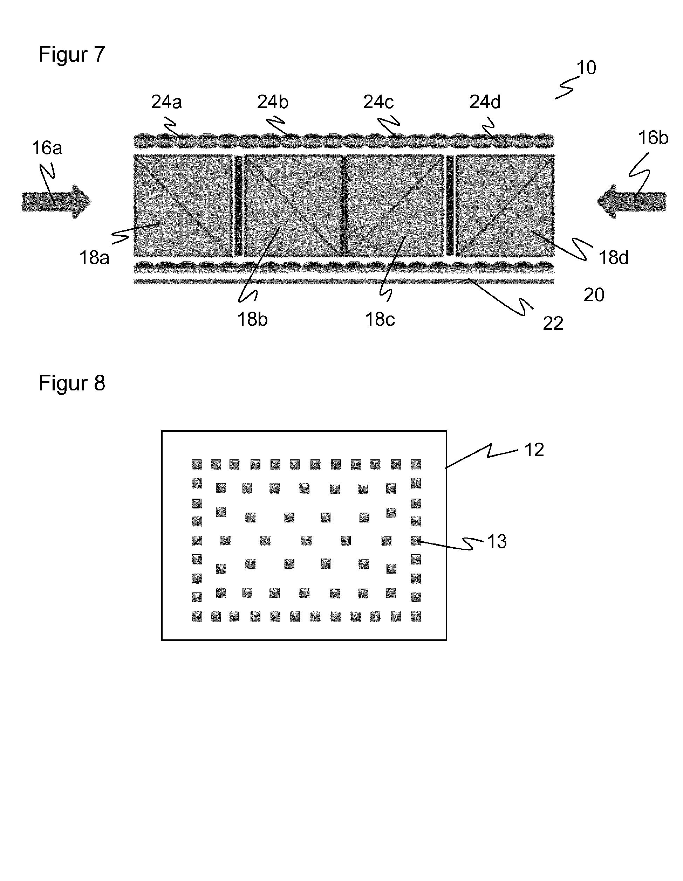

Figur 7 zeigt eine Weiterbildung der Beleuchtungsvorrichtung 10 mit Polrecycling und Beleuchtung von beiden Seiten, also eine Art Hybrid der Ausführungsformen nach Figur 2 und 3. Zusätzlich ist hier vorgesehen, den Strahlteilern 18a-d eine umverteilende Projektionsoptik 24a-d zuzuordnen. Dadurch können auch mehrstufige Aufhellungen von der Mitte zum Rand erreicht werden, etwa um sich der cos^4-Abhängigkeit besser anzunähern.

Die Lichtquelle 12 weist vorzugsweise eine Vielzahl von Einzellichtquellen auf, etwa 5*6, 6*8 oder 7*10 LEDs oder Laserdioden. Es kann mit Hilfe von direkt auf einer Leiterplatte assemblierten LED-Chips eine sehr hohe Packungsdichte erreicht werden. Beispielhafte Eckdaten eines LED-Chips sind eine Kantenlänge von 0,35 mm, eine Leistung von 55-100 mW und eine Wellenlänge von 850 nm. Spektral unterschiedliche emittierende LEDs sind möglich, etwa rot, grün, blau und/oder weiß, um unterschiedliche Objektkontraste zu erfassen. Die Einzellichtquellen sind vorzugsweise individuell ansteuerbar, was kostengünstig durch einen Mehrkanal-LED-Treiber-IC möglich ist, um die Helligkeit zusätzlich zur Umverteilung in den Projektionsoptiken 24a-d in hellen und dunklen Bereichen zu variieren. Die Kollomationsoptik 14 kann als Mikrolinsenarray ausgebildet werden. Damit wird die Lichtquelle 12 insgesamt sehr kompakt.

Die Leistung der Lichtquelle 12 sollte für Reichweiten von beispielsweise 0,5 m - 4,5 m genügen. Limitierend ist dabei vor allem die Wärmeabfuhr, besonders wenn teure Heatpipes oder der Einsatz von Lüftern vermieden werden sollen. Dennoch kann die Leistung der Einzellichtquellen um Faktoren höher ausgelegt werden als die eingestellte Nennleistung, um besonders dunkle Bereiche der Szenerie zu beleuchten. Zu Bildbereichen mit ausreichender Struktur werden dafür Einzellichtquellen mit geringer Leistung angesteuert oder ganz abgeschaltet. Es kommt nur darauf an, dass die zulässige Gesamtverlustleistung im Mittel nicht überschritten wird. Mit solchen adaptiven Beleuchtungsmustern kann der Dynamikbereich um mehr als eine Dekade reduziert werden, so dass insbesondere eine triangulierende 3D-Kamera deutlich robuster wird und bessere Tiefeninformationen erfasst.

Figur 8 zeigt eine beispielhafte LED-Matrix als Lichtquelle 12 mit insgesamt 69 Einzellichtquellen 13. Für eine zusätzliche Energieumverteilung in die Ränder nimmt die Besetzungsdichte nach außen hin zu. Die Anordnung der Mikrolinsen der Kondensoroptik 20 hat ein entsprechendes Muster. Die Effekte zur Randbereichsüberhöhung durch eine so besetzte Matrix als Lichtquelle 12 und die Umverteilung durch die Projektionsoptiken 24a-b ergänzen einander.

## Patentansprüche

1. Beleuchtungsvorrichtung (10) zur Projektion eines Beleuchtungsmusters, die eine unpolarisierte Lichtquelle (12)und in deren Strahlengang in dieser Reihenfolge einen ersten Strahlteiler (18a), einen optischen Verzögerer (28) zur Polarisationsdrehung und einen zweiten Strahlteiler (18b) aufweist,
wobei die Beleuchtungsvorrichtung (10) weiterhin einen reflexiven Mustergenerator (22) aufweist, sowie eine erste Projektionsoptik (24a), die dem ersten Strahlteiler (18a), und eine zweite Projektionsoptik (24b), die dem zweiten Strahlteiler (18b) zugeordnet ist,
wobei der erste Strahlteiler (18a) einen reflektierten ersten Lichtanteil und einen transmittierten zweiten Lichtanteil erzeugt, die zueinander unterschiedlich polarisiert sind,
wobei erster Strahlteiler (18a), Mustergenerator (22) und erste Projektionsoptik (24a) derart angeordnet sind, dass der erste Lichtanteil unter Aufprägung des Beleuchtungsmusters an dem Mustergenerator (22) reflektiert und dann von der ersten Projektionsoptik (24a) projiziert wird und
wobei erster Strahlteiler (18a), Verzögerer (28), zweiter Strahlteiler (18b), Mustergenerator (22) und zweite Projektionsoptik (24a) derart angeordnet sind, dass der zweite Lichtanteil den Verzögerer (28) unter Polarisationsdrehung durchläuft, dann vom zweiten Strahlteiler (24b) auf den Mustergenerator (22) reflektiert wird, unter Aufprägung des Beleuchtungsmusters an dem Mustergenerator (22) reflektiert und dann von der zweiten Projektionsoptik (24b) projiziert wird, **dadurch gekennzeichnet,**
**dass** die erste Projektionsoptik (24a) den ersten Lichtanteil derart nach außen und die zweite Projektionsoptik (24b) den zweiten Lichtanteil derart zentral projiziert, dass zum Ausgleich des Randbereichsabfalls des Beleuchtungsmusters der erste Lichtanteil einen Randbereich und der zweite Lichtanteil einen zentralen Bereich des Beleuchtungsmusters erzeugt.

2. Beleuchtungsvorrichtung (10) nach Anspruch 1,
wobei der Mustergenerator (22) parallel zur optischen Achse der Lichtquelle (12) und dagegen versetzt angeordnet ist.

3. Beleuchtungsvorrichtung (10) nach Anspruch 1 oder 2,
wobei die Projektionsoptiken (24a-b) auf einer dem Mustergenerator (22) gegenüberliegenden Seite der optischen Achse der Lichtquelle (12) angeordnet sind.

4. Beleuchtungsvorrichtung (10) nach einem der vorhergehenden Ansprüche,
die eine dem Mustergenerator (22) vorgeordnete Kondensoroptik (20) aufweist.

5. Beleuchtungsvorrichtung (10) nach einem der vorhergehenden Ansprüche, wobei die Projektionsoptiken (24a-b) ein Mikrolinsenarray aufweisen.

6. Beleuchtungsvorrichtung (10) nach einem der vorhergehenden Ansprüche, wobei die zweite Projektionsoptik (24b) das Licht in einen mittleren Streifen (30b) und die erste Projektionsoptik (24a) in zwei Randstreifen (30a) projiziert oder wobei die zweite Projektionsoptik (24b) das Licht in ein zentrales Rechteck (30b) oder eine zentrale Ellipse und die erste Projektionsoptik (24a) in einen Rechteckrahmen (30a) oder elliptischen Rahmen projiziert.

7. Beleuchtungsvorrichtung (10) nach einem der vorhergehenden Ansprüche, wobei der Mustergenerator (22) eine Pixelanordnung von polarisationsdrehenden Reflexionselementen aufweist.

8. Beleuchtungsvorrichtung (10) nach einem der vorhergehenden Ansprüche, wobei die Lichtquelle (12) eine Matrix von Einzellichtquellen (13) aufweist, und wobei insbesondere die Besetzungsdichte der Einzellichtquellen (13) von einem zentralen Bereich der Matrix nach außen hin zunimmt.

9. Anordnung von zwei Beleuchtungsvorrichtungen (10) nach einem der vorhergehenden Ansprüche nebeneinander, wobei ein gemeinsamer reflexiver Mustergenerator (22) und eine Blende (26) zur Vermeidung von optischem Übersprechen zwischen den Beleuchtungsvorrichtungen (10) vorgesehen ist.

10. 3D-Kamera mit mindestens einer Beleuchtungsvorrichtung (10) nach einem der vorhergehenden Ansprüche.

11. Verfahren zur Projektion eines Beleuchtungsmusters,
bei dem Licht einer unpolarisierten Lichtquelle (12) an einem ersten Strahlteiler (18a) in einen reflektierten ersten Lichtanteil und einen transmittierten zweiten Lichtanteil aufgeteilt wird, die zueinander unterschiedlich polarisiert sind, wobei der erste Lichtanteil unter Aufprägung des Beleuchtungsmusters an einem reflexiven Mustergenerator (22) reflektiert und dann von einer ersten Projektionsoptik (24a) projiziert wird und der zweite Lichtanteil unter Polarisationsdrehung einen Verzögerer (28) durchläuft, von einem zweiten Strahlteiler (18b) auf den Mustergenerator (22) reflektiert wird, unter Aufprägung des Beleuchtungsmusters an dem Mustergenerator (22) reflektiert und dann von einer zweiten Projektionsoptik (24b) projiziert wird,
**dadurch gekennzeichnet,**
**dass** zum Ausgleich des Randbereichsabfalls des Beleuchtungsmusters
der projizierte erste Lichtanteil einen Randbereich und der projizierte
zweite Lichtanteil einen zentralen Bereich des Beleuchtungsmusters erzeugt.

## Claims

1. An illumination apparatus (10) for projecting an illumination pattern, the apparatus (10) comprising an unpolarized light source (12) and in its beam path in this order a first beam splitter (18a), an optical delay element (28) for a polarization rotation and a second beam splitter (18b),
wherein the illumination apparatus (10) further comprises a reflective pattern generator (22) as well as a first projection optics (24a) associated with the first beam splitter (18a) and a second projection optics (24b) associated with the second beam splitter (18b),
wherein the first beam splitter (18a) generates a reflective first light component and a transmitted second light component which are mutually differently polarized, wherein first beam splitter (18a), pattern generator (22) and first projection optics (24a) are arranged so that the first light component is reflected at the pattern generator (22) while adding the illumination pattern and subsequently is projected by the first projection optics (24a),
wherein first beam splitter (18a), delay element (28), second beam splitter (18b), pattern generator (22) and second projection optics (24b) are arranged so that the second light component passes the delay element (28) with a polarization rotation, is then reflected by the second beam splitter (24b) onto the pattern generator (22), is reflected by the pattern generator (22) while adding the illumination pattern, and subsequently is projected by the second projection optics (24b),
**characterized in that** the first projection optics (24a) projects the first light component outwardly and the second projection optics (24b) projects the second light component centrally so that for compensating an edge region intensity drop of the illumination pattern the first light component generates an edge region and the second light component generates a central region of the illumination pattern.

2. The illumination apparatus (10) according to claim 1,
wherein the pattern generator (22) is arranged parallel to the optical axis of the light source (12) with an offset.

3. The illumination apparatus (10) according to claim 1 or 2,
wherein the projection optics (24a-b) are arranged on an opposite side of the optical axis of the light source (12) with respect to the pattern generator (22).

4. The illumination apparatus (10) according to any of the preceding claims, comprising a condenser optics (20) arranged upstream the pattern generator (22).

5. The illumination apparatus (10) according to any of the preceding claims,
wherein the projection optics (24a-b) comprise a microlens array.

6. The illumination apparatus (10) according to any of the preceding claims,
wherein the second projection optics (24b) project the light in a middle strip (30b) and the first projection optics (24a) in two edge strips (30a), or wherein the second projection optics (24b) project the light in a central rectangle (30b) or a central ellipse and the first projection optics (24a) in a rectangular frame (30a) or an elliptical frame.

7. The illumination apparatus (10) according to any of the preceding claims,
wherein the pattern generator (22) comprises a pixel arrangement of polarization rotating reflective elements.

8. The illumination apparatus (10) according to any of the preceding claims,
wherein the light source (12) comprises a matrix of individual light sources (13), and wherein in particular the density of the individual light sources (13) increases from a central region of the matrix to the outside.

9. An arrangement of two illumination apparatuses (10) according to any of the preceding claims side by side, wherein a common reflective pattern generator (22) and an aperture (26) for preventing optical crosstalk between the illumination apparatuses (10) are provided.

10. A 3D-camera having at least one illumination apparatus (10) according to any of the preceding claims.

11. A method for projecting an illumination pattern,
wherein light of an unpolarized light source (12) is split into a reflective first light component and a transmitted second light component at a first beam splitter (18a), the light components being mutually differently polarized,
wherein the first light component is reflected at a reflective pattern generator (22) while adding the illumination pattern and subsequently is projected by a first projection optics (24a),
and the second light component passes a delay element (28) with a polarization rotation, is reflected onto the pattern generator (22) by a second beam splitter (18b), is reflected at the pattern generator (22) while adding the illumination pattern and subsequently is projected by a second projection optics (24b),
**characterized in that** for compensating an edge region intensity drop of the illumination pattern the projected first light component generates an edge region and the projected second light component generates a central region of the illumination pattern.

## Revendications

1. Dispositif d'éclairage (10) pour la projection d'un motif d'éclairage, qui comprend une source de lumière (12) non polarisée, et dans son chemin optique, dans cet ordre, un premier diviseur de faisceau (18a), un retardateur optique (28) pour la rotation de la polarisation et un second diviseur de faisceau (18b),
dans lequel
le dispositif d'éclairage (10) comprend en outre un générateur de motif (22) réflexif, ainsi qu'une première optique de projection (24a) qui est associée au premier diviseur de faisceau (18a) et une seconde optique de projection (24b) qui est associée au second diviseur de faisceau (18b),
le premier diviseur de faisceau (18a) génère une première part de lumière réfléchie et une seconde part de lumière transmise qui sont polarisées différemment l'une par rapport à l'autre,
le premier diviseur de faisceau (18a), le générateur de motif (22) et la première optique de projection (24a) sont agencés de telle sorte que la première part de lumière est réfléchie sur le générateur de motif (22) avec superposition du motif d'éclairage, puis elle est projetée par la première optique de projection (24a), et
le premier diviseur de faisceau (18a), le retardateur (28), le second diviseur de faisceau (18b), le générateur de motif (22) et la seconde optique de projection (24a) sont agencés de telle sorte que la seconde part de lumière traverse le retardateur (28) avec rotation de la polarisation, puis elle est réfléchie par le second diviseur de faisceau (18b) sur le générateur de motif (22), elle est réfléchie sur le générateur de motif (22) avec superposition du motif d'éclairage, puis elle est projetée par la seconde optique de projection (24b),
**caractérisé en ce que**
la première optique de projection (24a) projette la première part de lumière vers l'extérieur et la seconde optique de projection (24b) projette la seconde part de lumière de façon centrale, de telle sorte que pour compenser la chute du motif d'éclairage dans la zone marginale, la première part de lumière génère une zone marginale et la seconde part de lumière génère une zone centrale du motif d'éclairage.

2. Dispositif d'éclairage (10) selon la revendication 1,
dans lequel le générateur de motif (22) est agencé parallèlement à l'axe optique de la source de lumière (12) et en décalage par rapport à celui-ci.

3. Dispositif d'éclairage (10) selon la revendication 1 ou 2,
dans lequel les optiques de projection (24a-b) sont agencées sur un côté de l'axe optique de la source de lumière (12) opposé au générateur de motif (22).

4. Dispositif d'éclairage (10) selon l'une des revendications précédentes, qui comprend un condenseur optique (20) agencé en amont du générateur de motif (22).

5. Dispositif d'éclairage (10) selon l'une des revendications précédentes, dans lequel les optiques de projection (24a-b) présentent un réseau de microlentilles.

6. Dispositif d'éclairage (10) selon l'une des revendications précédentes, dans lequel la seconde optique de projection (24b) projette la lumière dans une bande médiane (30b) et la première optique de projection (24a) projette dans deux bandes marginales (30a), ou la seconde optique de projection (24b) projette la lumière dans un rectangle central (30b) ou dans une ellipse centrale et la première optique de projection (24a) projettent dans un cadre rectangulaire (30a) ou dans un cadre elliptique.

7. Dispositif d'éclairage (10) selon l'une des revendications précédentes, dans lequel le générateur de motif (22) présente une disposition de pixels d'éléments de réflexion à rotation de polarisation.

8. Dispositif d'éclairage (10) selon l'une des revendications précédentes, dans lequel la source de lumière (12) présente une matrice de sources de lumière individuelles (13), et dans lequel en particulier la densité de répartition des sources de lumière individuelles (13) augmente depuis une zone centrale de la matrice vers l'extérieur.

9. Agencement de deux dispositifs d'éclairage (10) selon l'une des revendications précédentes l'un à côté de l'autre, dans lequel sont prévus un générateur de motif (22) réflexif commun et un cache (26) pour éviter une interférence optique entre les deux dispositifs d'éclairage (10).

10. Caméra 3D comportant au moins un dispositif d'éclairage (10) selon l'une des revendications précédentes.

11. Procédé pour la projection d'un motif d'éclairage, dans lequel la lumière d'une source de lumière (12) non polarisée est subdivisée sur un premier diviseur de faisceau (18a) en une première part de lumière réfléchie et en une seconde part de lumière transmise, qui sont polarisées différemment l'une de l'autre, la première part de lumière est réfléchie sur un générateur de motif (22) réflexif avec superposition du motif d'éclairage, puis elle est projetée par une première optique de projection (24a), et la seconde part de lumière traverse un retardateur (28) avec rotation de la polarisation, elle est réfléchie sur le générateur de motif (22) par un second diviseur de faisceau (18b), elle est réfléchie sur le générateur de motif (22) avec superposition du motif d'éclairage, puis elle est projetée par une seconde optique de projection (24b), **caractérisé en ce que**
pour compenser la chute du motif d'éclairage dans la zone marginale, la première part de lumière projetée génère une zone marginale et la seconde part de lumière projetée génère une zone centrale du motif d'éclairage.
